# EUROPÄISCHE PATENTSCHRIFT

(11) **EP 1 193 949 B1**
(45) Veröffentlichungstag und Bekanntmachung des Hinweises auf die Patenterteilung: **04.05.2005**
(21) Anmeldenummer: 01440246.5
(22) Anmeldetag: 31.07.2001
(51) Int. Cl.: H04L 29/06, B61L 7/06

(54) **Rechnersystem mit mehrkanaligen, signaltechnish sicheren Ubertragung**
Computer system with secured multichannel transmission
Système d'ordinateur avec transmission multicanal sécurisée

(30) Priorität: 21.08.2000 DE 10040866
(43) Veröffentlichungstag der Anmeldung: 03.04.2002
(73) Patentinhaber: ALCATEL, 75008 Paris (FR)
(72) Erfinder: Riechert, Frank, Dr., 01187 Dresden (DE); Urban, Alexander, 73666 Baltmannsweiler (DE); Kastanek, Werner, 1210 Wien (AT); Fitzke, André, 70806 Kornwestheim (DE); König, Nikolaus, 2320 Schwechat (AT); Schittenhelm, Uwe, 70186 Stuttgart (DE)
(74) Vertreter: Rausch, Gabriele, Dr.

(56) Entgegenhaltungen:
- EP-A- 0 645 920
- DE-A- 4 412 310
- LENNARTZ K: "SIGNALTECHNISCH SICHERE DATENUEBERTRAGUNG IM RAHMEN VON CIRNET" SIGNAL + DRAHT, TELZLAFF VERLAG GMBH. DARMSTADT, DE, Bd. 85, Nr. 4, 1. April 1993 (1993-04-01), Seiten 96-101, XP000380305 ISSN: 0037-4997
- MITTON D ET AL: "RFC 2881: Network access server requirements next generation (NASREQNG) NAS model" IETF REQUEST FOR COMMENTS, 27. Juli 2000 (2000-07-27), Seiten 1-15, XP002191789 Gefunden im Internet: <URL:http://www.ietf.org/rfc/rfc2881.txt?n umber=2881> [gefunden am 2002-02-28]
- DOPPELBAUER J,LENNARTZ K, VEIDER A, WARLITZ J: "Neues Basissystem für signaltechnisch sichere Anwendungen" SIGNAL+DRAHT, [Online] Dezember 1999 (1999-12), Seiten 1-10, XP002257412 Gefunden im Internet: <URL:http://www.alcatel.de/transport/pdf/f achartikel/12_99_jd_kl_av_jw.pdf> [gefunden am 2003-10-10]
- TANENBAUM A S: "COMPUTER NETWORKS. NETWORK ARCHITECTURES" COMPUTER NETWORKS, ENGLEWOOD CLIFFS, PRENTICE HALL, US, Seiten 9-27, XP002071762
- KIRCH O: "LINUX Wegweiser für Netzwerker, Kapitel 8: Das Point-to-Point Protokoll" O'REILLY/INTERNATIONAL THOMSON VERLAG GMBH, Juni 1998 (1998-06), Seiten 117-134, XP002257413 ISBN: 3-930673-18-5

## Beschreibung

Die Erfindung betrifft ein Rechnersystem mit mehrkanaligen, signaltechnisch sicheren Rechnern, deren Schnittstellen über ein einkanaliges, signaltechnisch nicht sicheres Übertragungsmedium zur Übertragung von Nachrichtentelegrammen miteinander verbunden sind. Bei vielen sicherheitskritischen Anwendungen, beispielsweise im Bereich der Luft- und Raumfahrt oder der Eisenbahnsignaltechnik, müssen Nachrichtentelegramme zwischen senderseitigen und empfängerseitigen Rechnern mittels vorgegebener Übertragungsmedien, beispielsweise ISDN, Siemens-PROFIBUS, ETHERNET ausgetauscht werden. Die kommunizierenden Rechner selbst können als signaltechnisch sicher eingestuft werden, da ihre Berechnungsergebnisse erst dann freigegeben werden, wenn alle denkbaren Fehlereinflüsse quasi ausgeschlossen werden können. Das geschieht überwiegend dadurch, dass die Berechnung mehrkanalig erfolgt und die ermittelten Ergebnisse miteinander verglichen werden und nur bei mehrheitlicher Übereinstimmung zur Weiterverarbeitung zugelassen werden. Die Kanäle sind dabei durch identische Einzelrechner oder Replicas gebildet und der Vergleichsmodus wird auch als Voting bezeichnet. Zunehmend besteht das Bedürfnis, sicherheitsrelevante Daten über weite Entfernungen und möglichst unter Nutzung vorhandener Übertragungsmedien auszutauschen. Um fehlerhafter Übertragung und letztlich Havarifällen vorzubeugen, müssen die Forderungen der CENELEC-Norm 50159 erfüllt werden. Ein Rechnersystem der oben genannten Gattung für die Anwendung bei sicherheitsrelevanter Datenübertragung im Bahnbereich wird von Bahnbetreibern nur zugelassen, wenn diese CENELEC-Norm erfüllt ist. Aus diesem Grunde wurden solche Rechnersysteme bisher sehr speziell auf die jeweilige Anwendung zugeschnitten entwickelt. Dabei wurden auch die Schnittstellen und die Übertragungswege anwendungsspezifisch konfiguriert. Verschiedene Rechner und verschiedene Übertragungsmedien sind nicht kompatibel. Auf der anderen Seite muss besonders für Bahnanwendungen eine sehr lange Nutzungsdauer, die mehrere Jahrzehnte umfassen kann, gegeben sein.

Lenartz K. "Signaltechnisch sichere Datenübertragung im Rahmen von CIR-NET", Signal und Draht, Band 85 Nr. 4, beschreibt eine Übertragungsprozedur zur signaltechnisch sicheren Datenübertragung zur Verwendung mit z.B. Stellwerkstechnik, Zugnummermeldeanlagen, Zuglenkung, usw. in einem offenen Netz (CIR-NET), wobei beide Endpunkte der Signalübertragung signaltechnisch sichere Verarbeitungseinheiten darstellen, deren Schnittstellen über ein einkanaliges signaltechnisch nicht sicheres Übertragungsmedium (CIR-NET) verbunden sind. Die bekannte Übertragungsprozedur umfasst eine Schnittstellenarchitektur mit einer Struktur nach dem ISO-OSI-Modell.

Der Erfindung liegt die Aufgabe zugrunde, einen signaltechnisch sicheren Austausch von Nachrichtentelegrammen über verschiedene Übertragungsmedien zu ermöglichen, wobei eine weitestgehende Kompatibilität zwischen den Systemkomponenten anzustreben ist und eine Kontrolle, ob der Inhalt der angegebenen Nachricht korrekt ist, implementiert ist.

Erfindungsgemäß wird die Aufgabe mit den kennzeichnenden Merkmalen des Anspruchs 1 gelöst. Die Schnittstellenarchitektur der One Channel Safe Struktur zeichnet sich vor allem durch eine strikte Aufgabenzuordnung der einzelnen Ebenen Application Layer, Protocol Layer, Data Integrity Layer und Device Layer aus. Auf diese Weise ergibt sich eine vereinfachte Anpassbarkeit des Rechnersystems sowohl an verschiedene Übertragungsmedien als auch an verschiedene periphere Systeme. Die Struktur des One Channel Safe ermöglicht eine sichere Datenübertragung auf einem nicht sicheren Übertragungsweg, d.h., dass die Forderungen der oben genannten CENELEC-Norm erfüllt werden können. Mit den Elementen der One Channel Safe Struktur wird ein konfigurierbarer Rahmen definiert, der durch das Hinzufügen protokollspezifischer Komponenten für unterschiedliche Anwendungen eingesetzt werden kann. Es ergibt sich ein generische Protokoll, das unabhängig von den zum Einsatz kommenden Übertragungsmedien verwendbar ist. Die Kommunikation läuft dabei folgendermaßen ab:
1. Die Replicas des senderseitigen Rechners vergleichen mittels Voting ihre Ergebnisse im Hinblick auf Korrektheit,
2. ein Sicherheitsanhang wird generiert,
3. der senderseitige Rechner versendet das entsprechende Nachrichtentelegramm mit Sicherheitsanhang,
4. der Partnerrechner empfängt die Daten und überprüft den Sicherheitsanhang auf Korrektheit und
5. die korrekten Nutzdaten werden auf alle Replicas des empfangenden Rechners verteilt.

Für die Steuerung und die Überwachung des Datenübertragungsvorgangs ist das Protocol Layer zuständig, während das Data Integrity Layer für die signaltechnisch sichere Umsetzung des Nachrichtentelegramms von dem mehrkanaligen Rechner auf das einkanalige Übertragungsmedium sorgt, wobei zur Aufrechterhaltung der signaltechnischen Sicherheit während der Umsetzung auch der oben genannte Sicherheitsanhang generiert wird. Dabei wird für jeden Kanal ein unvollständiger Sicherheitsanhang generiert, wobei in mehreren Kanälen übereinstimmende Teilabschnitte des Sicherheitsanhangs zu einem vollständigen Sicherheitsanhang verbunden werden. Mit Hilfe dieser Form der Datenübertragung ergeben sich Einsparungen hinsichtlich der Anzahl der erforderlichen Übertragungskanäle. Ein einkanaliger, signaltechnisch nicht sicherer Übertragungsweg genügt, um eine sichere Kommunikation im Sinne der oben genannten CENELEC-Norm zwischen signaltechnisch sicheren Rechnern zu realisieren. Das Device Layer übernimmt die Anpassung der bereits signaltechnisch gesicherten Nachrichtentelegramme an das Übertragungsmedium, beispielsweise ISDN, PROFIBUS oder ETHERNET.

Vorteilhafte Ausführungsformen der Erfindung sind in den Unteransprüchen gekennzeichnet und werden nachstehend anhand figürlicher Darstellungen näher erläutert. Es zeigen:
- Figur 1: eine stark schematisierte Darstellung einer One Channel Safe-Struktur,
- Figur 2: die One Channel Safe Struktur in spezifischerer Darstellung,
- Figur 3: eine erste Variante zur Vorbereitung der Nachrichtentelegrammübertragung,
- Figur 4: eine zweite Variante zur Vorbereitung der Nachrichtentelegrammübertragung,
- Figur 5: eine Möglichkeit zur Überprüfung der Funktionsfähigkeit des Übertragungsweges,
- Figur 6: ein Verfahren zur Bildung des Sicherheitsanhangs und
- Figur 7: die Generierung eines aus Nachricht und Sicherheitsanhang bestehenden Datentelegramms.

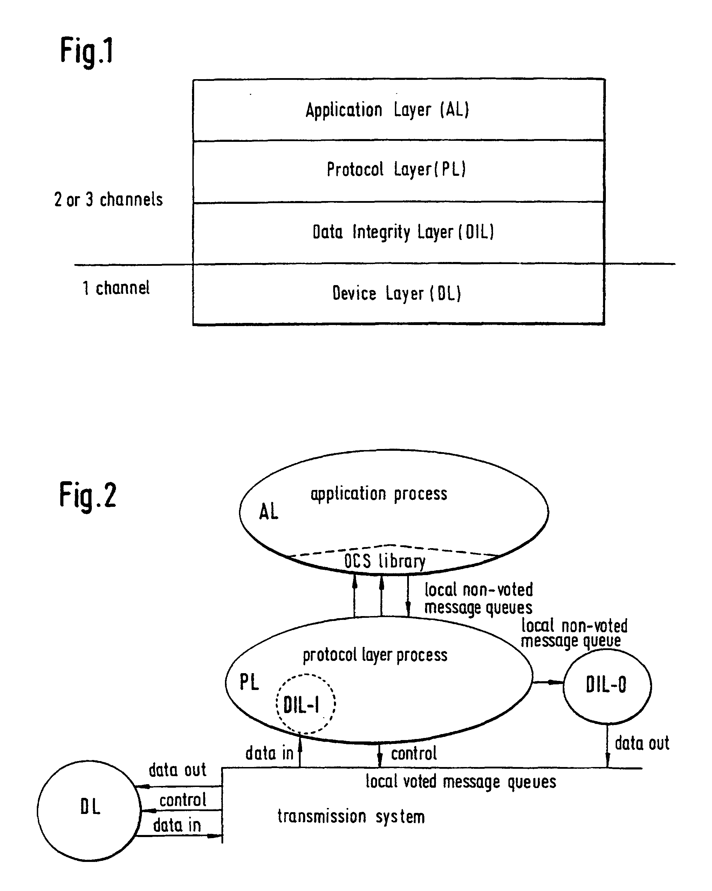

Figur 1 veranschaulicht schematisch die wichtigsten Bestandteile einer Schnittstelle, die die Verbindung zwischen datentechnisch sicheren, mehrkanaligen Rechnern auf einem datentechnisch nicht sicheren, einkanaligen Übertragungsweg herstellt. Die wichtigsten Bestandteile einer solchen OCS (One Channel Safe) -Schnittstelle sind AL (Application Layer), PL (Protocol Layer), DIL (Data Integrity Layer) und DL (Device Layer). Das AL beinhaltet anwendungsspezifische Funktionen und übermittelt einen Kommunikationswunsch an das PL. Im PL erfolgt eine Protokollspezifizierung für Verbindungsaufbau und -abbau, sowie eine Überwachung bzw. Prüfung der Reihenfolgerichtigkeit und der Integrität eingehender Nachrichten und eventueller Lebenszeichen. Jeder Protokollspezifizierung ist ein Prozess zugeordnet, in dem ein Sicherungsanhang SA für ausgehende Nachrichten gebildet wird. Die Bildung des Sicherungsanhanges SA erfolgt dabei im DIL. Außerdem erfolgt im DIL das OCS-Voting, wodurch die bisher mehrkanalig bearbeiteten Nachrichten und Sicherungsanhänge SA für die einkanalige Übertragung umgesetzt werden. Das DL gehört bereits in den einkanaligen Abschnitt der Nachrichtenübertragung. Die Aufgabe des DL besteht im wesentlichen darin, den Aufbau, die Überwachung und die Beendigung des Datenaustausches an die speziellen Erfordernisse des jeweils vorhandenen Übertragungsmediums , beispielsweise ISDN, PROFIBUS oder ETHERNET anzupassen.

Figur 2 zeigt eine Implementierung der OCS-Schichten. Das AL beinhaltet eine OCS-Library, über die die Kommunikation mit dem PL mittels message queues erfolgt. Ein application process des AL hat somit keine direkte Verbindung zum PL. Die message queues zwischen der OCS-Library und dem PL sowie zwischen dem PL und den anderen Layers des OCS-Prozesses garantieren, dass ein senderseitiger mehrkanaliger Rechner nur Nahrichten versenden kann und dass ein empfängerseitiger mehrkanaliger Rechner nur Nachrichten empfangen kann. Das PL kann entsprechend der anwendungsspezifischen Anforderungen, beispielsweise für Siemens-PROFIBUS oder ETHERNET, geeignete Protokolle generieren. DIL-I (Input) überprüft nur den Sicherheitsanhang SA eingehender Nachrichten, während DIL-O (Output) für die Bildung des Sicherheitsanhanges SA für ausgehende Nachrichten zuständig ist. Beide DIL-Prozesse sind voneinander unabhängig. Das PL ist innerhalb des OCS für alle protokollspezifischen Abläufe verantwortlich. Dazu gehört auch die Identifizierungs- und Authentifizierungsüberwachung der Kommunikationspartner. Dazu wird ein Identifizierungs- und Authentifizierungs-Dialog zu Beginn jedes Verbindungsaufbaus initiiert, wobei insbesondere kryptografische Schlüssel oder Anfangssequenznummern ausgetauscht werden.

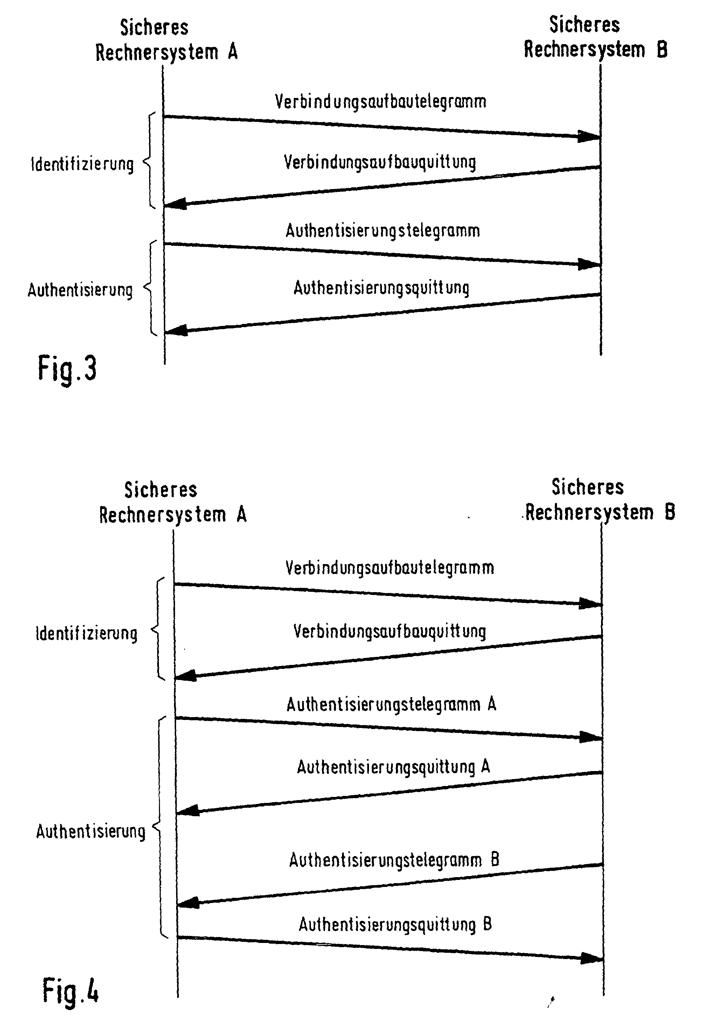

Figur 3 veranschaulicht einen unidirektionalen Identifizierungs- und Authentifizierungs-Dialog. Der Dialog besteht dabei aus einem Verbindungsaufbautelegramm, einer Verbindungsaufbauquittung, einem Authentisierungstelegramm und einer Authentisierungsquittung. Um eine Authentisierung zu ermöglichen, kann eine Zufallszahl vom mehrkanaligen Rechner A zum mehrkanaligen Rechner B gesendet werden. Der Rechner B verändert diese Zufallszahl mit einem nur den sicheren Rechnern bekannten Algorithmus und sendet diesen Wert in der Authentisierungsquittung an Rechner A zurück. Damit ist gewährleistet, dass der Rechner B sich korrekt bei Rechner A autorisiert hat; es ist aber nicht garantiert, dass diese Quittung von Rechner A korrekt empfangen wurde. Deshalb darf Rechner B nicht ohne weiteres eigene sichere Nachrichten an Rechner A schicken. Eine datentechnisch sichere Kommunikation kann hier folglich nur in unidirektionaler Weise, das heißt vom Rechner A zum Rechner B erfolgen.

Um einen bidirektionalen Austausch sicherheitsrelevanter Nachrichten zu ermöglichen, ist zusätzlich ein Authentisierungstelegramm seitens des Rechners B erforderlich, welches von dem Rechner A quittiert wird. Diese Variante ist in Fig. 4 dargestellt.

Des weiteren beinhaltet das PL Datenverifizierungsmittel zur Überwachung der Rechtzeitigkeit und der Reihenfolgerichtigkeit der Nachrichtentelegramme. Werden bereits beim Verbindungsaufbau gemäß der Fig. 3 und 4 Sequenznummern ausgetauscht, können diese bei jeder weiteren zu versendenden Nachricht um eins erhöht werden. Damit ist eine Erkennung der Reihenfolgerichtigkeit gegeben. Wird jede Nachricht zusätzlich mit einem Zeitstempel versehen, kann der empfangende Rechner die Laufzeit jeder Nachricht bestimmen. Dazu ist eine Synchronisation der beiden kommunizierenden Rechner erforderlich, welche beispielsweise mit Hilfe von Funkuhren realisiert werden kann. Bei einer anderen Variante zur Überwachung der Rechtzeitigkeit und der Reihenfolgerichtigkeit wird auf eine Synchronisation und damit die Bestimmbarkeit der Laufzeit der Nachrichtentelegramme verzichtet. Bei dieser Variante sind im PL der beteiligten Rechner Timer realisiert, wobei der jeweilige Rechner von seiner eigenen Systemzeit als Referenz ausgeht.

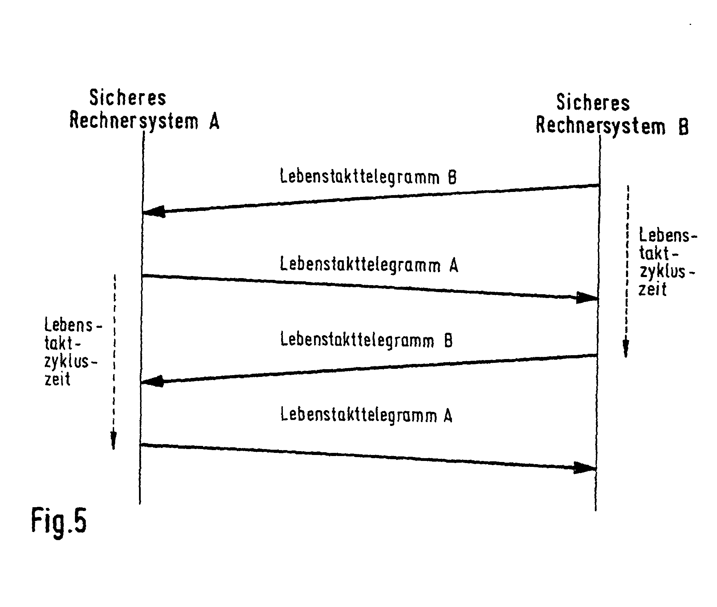

Des weiteren beinhaltet das PL Überwachungsmittel zur Feststellung einer Unterbrechung der Kommunikationsverbindung. Wie Fig. 5 zeigt, werden immer dann, wenn kein Austausch von Nachrichtentelegrammen zwischen den Rechnern A und B stattfindet Lebenstakttelegramme ausgetauscht. Vorzugsweise wird die Lebenstaktzykluszeit mit Hilfe eines im PL realisierten Timers überwacht, wobei nach Ablauf des Timers ein neues Lebenstakttelegramm gesendet wird und der Timer auf seinen Ausgangswert zurückgesetzt wird.

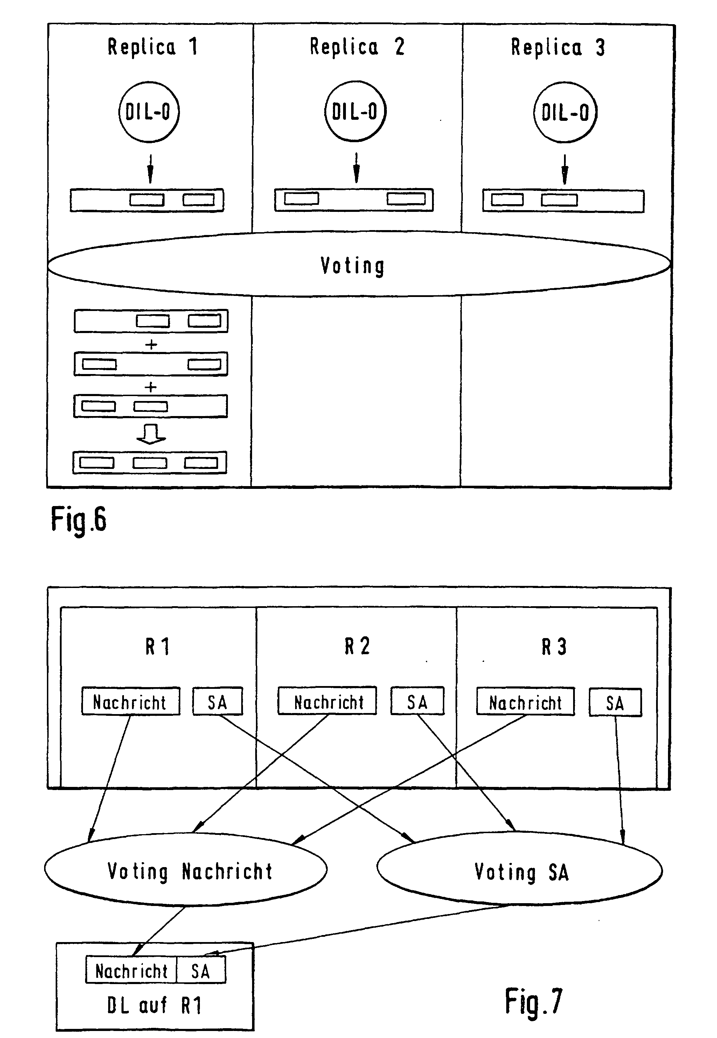

Das DIL dient im wesentlichen der Umsetzung einer Nachricht, die signaltechnisch sicher im mehrkanaligen Rechner vorliegt, auf den nichtsicheren Übertragungsweg. Dazu wird ein SA (Sicherungsanhang) generiert, der an die eigentliche Nachricht einzufügen ist. Fig. 6 veranschaulicht ein Verfahren zur Bildung des SA. Dabei sind Vorkehrungen getroffen, um die Ausgabe von Nachrichten mit falschen Inhaltsgehalt, aber korrektem SA zu unterbinden. Elementarer Ansatz dabei ist, dass im DIL jeder Replica nur ein unvollständiger Sicherungsanhang SA generiert wird. Der Sicherungsanhang SA wird in drei Teile aufgeteilt, wobei auf jeder Replica nur zwei der drei Teile in korrekter Form vorliegen. Das kann beispielsweise dadurch erreicht werden, dass auf jeder Replica ein bestimmter Teil des Sicherungsanhanges SA zerstört wird. In jeder Replica fehlt ein anderer der drei Teile des Sicherungsanhangs SA. Somit ist gewährleistet, dass ein korrekter und vollständiger Sicherungsanhang SA nicht gebildet werden kann, wenn nur eine Replica funktionsfähig ist. Auf der anderen Seite ist aber auch gewährleistet, dass ein vollständiger Sicherungsanhang SA aus zwei korrekt arbeitenden Replicas gebildet werden kann. Gemäß Fig. 6 wird in der Replica 1 der erste Teil, in Replica 2 der zweite Teil und in Replica 3 der dritte Teil des Sicherungsanhanges SA unbrauchbar gemacht. Mittels eines Voting-Modus, bei dem die Daten der einzelnen Teile des Sicherheitsanhanges SA miteinander verglichen werden und mittels eines reihenfolgerichtigen Zusammensetzens der gevoteten Daten wird ein kompletter und korrekter Sicherungsanhang SA erzeugt.

Fig. 7 veranschaulicht, wie die Nachricht bzw. der Sicherungsanhang SA zu den eigentlich zu übertragenden Daten zusammengefügt wird. Ein OCS-Voting-Modus vergleicht sowohl die eigentliche Nachricht als auch den Sicherungsanhang SA separat. Sind beide Vergleiche zu einem positiven Ergebnis gekommen, so kann eine Ausgabe der Daten mit entsprechendem Sicherungsanhang SA auf der dafür vorgesehenen Replica erfolgen.

Die One Channel Safe Struktur der Schnittstelle ist für verschiedene signaltechnisch sichere Anwendungen und für unterschiedliche Übertragungsmedien geeignet. Beispielsweise ist vorstellbar, dass verschiedene periphere Anwendungen über Siemens-PROFIBUS oder über ETHERNET kommunizieren. Aus diesem Grund kann auch die Verwendung unterschiedlicher Sicherheitsanhänge SA erforderlich sein. Je nach Anforderung kommen dafür beispielsweise Sicherheitsanhänge SA auf der Basis eines CRC-Codes, eines DES oder eines Hash-Codes, insbesondere MD4 beziehungsweise MD5, oder auch kryptografische Codes in Frage.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung gebrauch machen.

## Patentansprüche

1. Rechnersystem mit mehrkanaligen, signaltechnisch sicheren Rechnern, deren Schnittstellen über ein einkanaliges, signaltechnisch nicht sicheres Übertragungsmedium zur Übertragung von Nachrichtentelegrammen miteinander verbunden sind,
dass die Schnittstellenarchitektur für jeden Rechner eine One Channel Safe (OCS) Struktur mit einer strikten Aufgabenzuordnung umfasst, welche
- ein Application Layer (AL),
- ein Protocol Layer (PL),
- ein Data Integrity Layer (DIL) und
- ein Device Layer (DL) aufweist,
wobei
- das Application Layer (AL) Übertragungsmittel zur Übertragung eines Kommunikationswunsches an das Protocol Layer (PL) aufweist,
- das Protocol Layer (PL) Protokollspezifizierungsmittel zum Verbindungsaufbau bzw.-abbau, zur Identifizierung und Authentifizierung, zur Reihenfolgeerkennung und zur Lebenszeichenüberwachung aufweist,
- das Data Integrity Layer (DIL) Umsetzungsmittel zur signaltechnisch sicheren Umsetzung des Nachrichtentelegramms von dem mehrkanaligen Rechner auf das einkanalige Übertragungsmedium aufweist,
- das Device Layer (DL) Anpassungsmittel zur Anpassung der signaltechnisch gesicherten Nachrichtentelegramme an das Übertragungsmedium aufweist, **dadurch gekennzeichnet dass** die Umsetzungsmittel des Data Integrity Layer (DIL) für jeden Kanal Generierungsmittel zur Generierung eines Sicherheitsanhanges (SA) und Votingmittel aufweisen, die derart angepasst sind, dass der gevotete Sicherheitsanhang (SA) mit dem separat gevoteten Nachrichtentelegramm verbunden und als signaltechnisch gesicherte Nachricht an das Device Layer (DL) weitergeleitet wird, wobei für jeden Kanal ein unvollständiger Sicherheitsanhang (SA) generiert wird, wobei in mehreren Kanälen übereinstimmende Teilabschnitte des Sicherheitsanhanges (SA) zu dem vollständigen Sicherheitsanhang (SA) verbunden werden.

2. Rechnersystem nach Anspruch 1,
**dadurch gekennzeichnet, dass** die Protokollspezifizierungsmittel des Protocol Layer (PL) Identifizierungs- und Authentifizierungsdialog-Mittel aufweisen, die derart angepasst sind, dass zu Beginn des Verbindungsaufbaus zwischen den Rechnern Datentelegramme, insbesondere beinhaltend kryptografische Schlüssel oder Anfangssequenznummern, ausgetauscht werden.

3. Rechnersystem nach Anspruch 2,
**dadurch gekennzeichnet, dass** die Identifizierungs- und Authentifizierungsdialog-Mittel Dialogmittel zum Senden bzw. Empfangen eines Verbindungsaufbautelegramms, einer Verbindungsaufbauquittung, eines senderseitigen Authentisierungstelegramms und einer empfängerseitigen Authentisierungsquittung aufweisen die derart angepasst sind, dass die Übertragung der Nachrichtentelegramme in unidirektionaler Weise erfolgt.

4. Rechnersystem nach Anspruch 2,
**dadurch gekennzeichnet, dass** die Identifizierungs- und Authentifizierungsdialog-Mittel Dialogmittel zum Senden bzw. Empfangen eines Verbindungsaufbautelegramms, einer Verbindungsaufbauquittung, eines senderseitigen Authentifizierungstelegramms, einer empfängerseitigen Authentifizierungsquittung, eines empfängerseitigen Authentifizierungstelegramms und einer senderseitigen Authentifizierungsquittung aufweisen, die derart angepasst sind, dass die Übertragung der Nachrichtentelegramme in bidirektionaler Weise durchgeführt wird.

5. Rechnersystem nach einem der vorangehenden Ansprüche,
**dadurch gekennzeichnet, dass** die Protokollspezifierungsmittel des Protocol Layer (PL) Datenverifizierungsmittel zur Überwachung der Rechtzeitigkeit und der Reihenfolgerichtigkeit der Nachrichtentelegramme aufweisen.

6. Rechnersystem nach Anspruch 5,
**dadurch gekennzeichnet, dass** die Datenverifizierungsmittel jedes Nachrichtentelegramm modifizierende Zeitstempel- und Sequenznummernerzeugungsmittel aufweisen, wobei der senderseitige und der empfängerseitige Rechner Synchronisierungsmittel bezüglich der Zeitstempelerzeugung, insbesondere Funkuhren, aufweisen.

7. Rechnersystem nach Anspruch 1, **dadurch gekennzeichnet, dass** es sich bei dem Übertragungsmedium um ISDN, PROFIBUS oder ETHERNET handelt.

8. Rechnersystem nach einem der vorangehenden Ansprüche,
**dadurch gekennzeichnet, dass** die Protokollspezifizierungsmittel des Protocol Layer (PL) Überwachungsmittel zur Feststellung einer Unterbrechung der Kommunikationsverbindung aufweisen.

9. Rechnersystem nach Anspruch 8,
**dadurch gekennzeichnet, dass** die Überwachungsmittel Lebenstakttelegrammerzeugungsmittel aufweisen die derart angepasst sind, dass zwischen dem senderseitigen Rechner und dem empfängerseitigen Rechner wechselseitig zyklische Lebenstakttelegramme ausgetauscht werden.

10. Rechnersystem nach einem der vorangehenden Ansprüche,
**dadurch gekennzeichnet, dass** der Sicherheitsanhang (SA) als CRC-Code (Cyclic Redundand Code) oder Hash-Code generiert wird.

## Claims

1. Computer system with multi-channel computers which have secure signalling, but the interfaces of which are connected to each other for transmitting information messages via a single-channel transmission medium without secure signalling,
that the interface architecture for each computer includes a One Channel Safe (OCS) structure with a strict assignment of tasks, having
- an Application Layer (AL),
- a Protocol Layer (PL),
- a Data Integrity Layer (DIL), and
- a Device Layer (DL),
wherein
- the Application Layer (AL) has transmission means for transmitting a wish to communicate to the Protocol Layer (PL) ,
- the Protocol Layer (PL) has protocol specification means for setting up and clearing down connections, for identification and authentication, for sequence recognition and for signs of life monitoring,
- the Data Integrity Layer (DIL) has conversion means for converting the information message with secure signalling from the multi-channel computer onto the single-channel transmission medium,
- the Device Layer (DL) has adaptation means for adapting the information messages with secure signalling onto the transmission medium,
**characterized in that** the conversion means of the Data Integrity Layer (DIL) have, for each channel, generation means for generating a security addendum (SA) and voting means, which are adapted in such a way that the voted security addendum (SA) is joined to the separately voted information message, and passed on to the Device Layer (DL) as an information message with secure signalling, an incomplete security addendum (SA) being generated for each channel, corresponding subsections of the security addendum (SA) in multiple channels being joined to the complete security addendum (SA).

2. Computer system according to Claim 1,
**characterized in that** the protocol specification means of the Protocol Layer (PL) have identification and authentication dialogue means, which are adapted in such a way that at the start of the connection setup, data messages, particularly including cryptographic keys or initial sequence numbers, are exchanged between the computers.

3. Computer system according to Claim 2,
**characterized in that** the identification and authentication dialogue means include dialogue means for transmitting and receiving a connection setup message, a connection setup acknowledgment, a transmitter-side authentication message and a receiver-side authentication acknowledgment, which are adapted in such a way that the information messages are transmitted unidirectionally.

4. Computer system according to Claim 2,
**characterized in that** the identification and authentication dialogue means include dialogue means for transmitting and receiving a connection setup message, a connection setup acknowledgment, a transmitter-side authentication message, a receiver-side authentication acknowledgment, a receiver-side authentication message and a transmitter-side authentication acknowledgment, which are adapted in such a way that the information messages are transmitted bidirectionally.

5. Computer system according to one of the preceding claims,
**characterized in that** the protocol specification means of the Protocol Layer (PL) include data verification means for monitoring the information messages for correct timing and correct sequence.

6. Computer system according to Claim 5,
**characterized in that** the data verification means of each information message include modifying time stamp and sequence number generation means, the transmitter-side and receiver-side computers having synchronisation means regarding the time stamp generation, particularly radio clocks.

7. Computer system according to Claim 1,
**characterized in that** the transmission medium is ISDN, PROFIBUS or ETHERNET.

8. Computer system according to one of the preceding claims,
**characterized in that** the protocol specification means of the Protocol Layer (PL) include monitoring means to identify an interruption of the communication connection.

9. Computer system according to Claim 8,
**characterized in that** the monitoring means include means of generating life cycle messages, the means being adapted in such a way that cyclic life cycle messages are exchanged between the transmitter-side computer and the receiver-side computer.

10. Computer system according to one of the preceding claims,
**characterized in that** the security addendum (SA) is generated as a CRC code (cyclic redundand code) or hash code.

## Revendications

1. Système d'ordinateur avec des ordinateurs multicanal, sécurisés au niveau de la technique de signalisation, dont les interfaces sont reliées entre eux au moyen d'un support de transmission monocanal, non sécurisé au niveau de la technique de signalisation pour la transmission de télégrammes d'information,
**caractérisé en ce que**
l'architecture d'interface pour chaque ordinateur comprend une structure One Channel Safe (OCS) avec une attribution de tâches stricte, laquelle présente
- un Application Layer (AL),
- un Protocol Layer (PL),
- un Data Integrity Layer (DIL) et
- un Device Layer (DL),
- l'application layer (AL) présentant des moyens de transmission pour la transmission d'un souhait de communication au Protocol Layer (PL),
- le Protocol Layer (PL) présentant des moyens de spécification de protocole pour l'établissement de la liaison ou la coupure de la liaison, pour l'identification et l'authentification, pour la reconnaissance de l'ordre de succession et pour le contrôle des signaux de vie,
- le Data Integrity Layer (DIL) présentant des moyens de transfert pour le transfert sécurisé au niveau de la technique de signalisation du télégramme d'information de l'ordinateur multicanal au support de transmission monocanal,
- le Device Layer (DL) présentant des moyens d'adaptation pour l'adaptation des télégrammes d'information sécurisés au niveau de la technique de signalisation au support de transmission, **caractérisé en ce que**
les moyens de transfert du Date Integrity Layer (DL) présentent pour chaque canal des moyens de génération pour la génération d'une annexe de sécurité (SA) et de moyens de vote, lesquels sont adaptés de telle sorte que l'annexe de sécurité (SA) votée est reliée au télégramme d'information voté séparément et est acheminée sous la forme d'information sécurisée au niveau de la technique de signalisation au Device Layer (DL), une annexe de sécurité (SA) incomplète étant générée pour chaque canal, des tronçons partiels, coïncidant dans plusieurs canaux, de l'annexe de sécurité (SA) étant reliés pour former l'annexe de sécurité (SA) complète.

2. Système d'ordinateur selon la revendication 1,
**caractérisé en ce que** les moyens de spécification de protocole du Protocol Layer (PL) présentent des moyens de dialogue d'identification et d'authentification, qui sont adaptés de telle sorte que, au début de l'établissement de la liaison, des télégrammes de données, en particulier contenant des codes cryptographiques ou des numéros de séquence initiale, sont échangés entre les ordinateurs.

3. Système d'ordinateur selon la revendication 2,
**caractérisé en ce que** les moyens de dialogue d'identification et d'authentification présentent des moyens de dialogue pour l'émission et la réception d'un télégramme d'établissement de liaison, d'une confirmation d'établissement de liaison, d'un télégramme d'authentification côté émetteur et d'une confirmation d'authentification côté récepteur, qui sont adaptés de telle sorte que la transmission des télégrammes d'information s'effectue de façon unidirectionnelle.

4. Système d'ordinateur selon la revendication 2,
**caractérisé en ce que** les moyens de dialogue d'identification et d'authentification présentent des moyens de dialogue pour l'émission et la réception d'un télégramme d'établissement de liaison, d'une confirmation d'établissement de liaison, d'un télégramme d'authentification côté émetteur, d'une confirmation d'authentification côté récepteur, d'un télégramme d'authentification côté récepteur et d'une confirmation d'authentification côté émetteur, qui sont adaptés de telle sorte que la transmission des télégrammes d'information est effectuée de façon unidirectionnelle.

5. Système d'ordinateur selon l'une quelconque des revendications précédentes,
**caractérisé en ce que** les moyens de spécification de protocole du Protocol Layer (PL) présentent des moyens de vérification de données pour le contrôle du moment opportun et de l'état correct de succession des télégrammes d'information.

6. Système d'ordinateur selon la revendication 5,
**caractérisé en ce que** les moyens de vérification de données de chaque télégramme d'information présentent des moyens de génération de cachet d'heure et de numéro de séquence effectuant des modifications, l'ordinateur côté émetteur et l'ordinateur côté récepteur présentant des moyens de synchronisation en ce qui concerne la génération de cachet d'heure, en particulier des horloges radiopilotées.

7. Système d'ordinateur selon la revendication 1, **caractérisé en ce qu'**il s'agit pour le support de transmission de ISDN, PROFIBUS ou ETHERNET.

8. Système d'ordinateur selon l'une quelconque des revendications précédentes,
**caractérisé en ce que** les moyens de spécification de protocole du Protocol Layer (PL) présentent des moyens de contrôle pour la constatation d'une interruption de la liaison de communication.

9. Système d'ordinateur selon la revendication 8,
**caractérisé en ce que** les moyens de contrôle présentent des moyens de génération de télégramme de cycle de vie, qui sont adaptés de telle sorte que des télégrammes cycliques de rythme de vie sont échangés à tour de rôle entre l'ordinateur côté émetteur et l'ordinateur côté récepteur.

10. Système d'ordinateur selon l'une quelconque des revendications précédentes,
**caractérisé en ce que** l'annexe de sécurité (SA) est générée sous forme de code CRC (Cyclic Redundand Code) ou de Hash-Code.
